# EUROPEAN PATENT SPECIFICATION

(11) **EP 1 925 635 B1**
(45) Date of publication and mention of the grant of the patent: **05.08.2009**
(21) Application number: 06024437.3
(22) Date of filing: 24.11.2006
(51) Int. Cl.: C08J 9/18, C08J 9/232, C08L 23/12, C08L 51/06, C08K 5/20

(54) **Expanded beads and foamed molded article**
Expandierte Perlen und Schaumformartikel
Perles expansées et article moulé et moussé

(43) Date of publication of application: 28.05.2008
(73) Proprietor: JSP CORPORATION, Tokyo 100-0005 (JP)
(72) Inventor: Reichman, Thierry Arnold, 60190 Estrées-Saint-Denis (FR); Wozniak, Boris Stephan, 60190 Estrées-Saint-Denis (FR)
(74) Representative: Luderschmidt, Schüler & Partner

(56) References cited:
- JP-A- 59 210 954
- US-A1- 2005 056 957
- US-A1- 2006 047 048
- DATABASE CA [Online] CHEMICAL ABSTRACTS SERVICE, COLUMBUS, OHIO, US; FUKUSHIMA, NORIYUKI ET AL: "Laminated bodies with bleed out, scratch, and wear resistance for automobile interiors" XP002429127 retrieved from STN Database accession no. 145:9559 & JP 2006 142735 A (NOF CORPORATION, JAPAN) 8 June 2006 (2006-06-08)

## Description

This invention relates to expanded beads and to a foamed molded article which is obtained from the expanded beads and which emits substantially no or significantly reduced creaky noise when subjected to friction.

### Description of Prior Art:

One known method for preparing a foamed molded article of a polypropylene resin composition is an in-mold molding method in which expanded beads of the polypropylene resin composition (hereinafter referred to as "PP expanded beads") are filled in a mold cavity and fuse-bonded together. The in-mold molding method can produce foamed molded articles having a wide range of expansion ratios and a wide variety of shapes including simple and complicated ones and, therefore, very advantageous over other methods such as an extrusion molding method.

A foamed molded article obtained from PP expanded beads (hereinafter referred to as "PP foamed molded article") is known to have a problem because it emits an unpleasant creaky noise when subjected to friction. To cope with this problem, the following measures (a)-(c) have been proposed:

(a) Japanese Unexamined Patent Application Publication No. JP-A-S59-210954 proposes applying a coating of a higher fatty acid amide, an ethylene-vinyl acetate copolymer, a wax, a low molecular weight polyethylene or a mixture thereof onto a surface of a foamed molded article having an expansion ratio of at least 15.

(b) Japanese Unexamined Patent Application Publication No. H 10-298341 proposes applying a coating of a surfactant to at least one of contacting surfaces of a foam body and another body.

(c) U. S. Patent Application Publication No. 20040265561 proposes a plastic foam product having a surface provided with fine protuberances which minimize noise due to friction.

The above measures (a) and (b) have a problem because a troublesome coating step must be carried out. Further, it is difficult to obtain a uniform coating. Furthermore, the coating is apt to be delaminated during preparation or use. A coating of a higher fatty acid amide has an additional problem that the amide is melted or vaporized when exposed to a high temperature and high humidity environment such as in automobiles. The vaporized amide will cause fogging of window glasses of the automobiles. The noise prevention effect of the above measure (c) is not fully satisfactory.

The present invention has been made in view of the foregoing problems.

In accordance with the present invention there is provided expanded beads of a polypropylene resin composition having a bulk density of 10 g/L to 450 g/L, said polypropylene resin composition comprising (A) a polypropylene resin, (B) an organic acid-modified olefin elastomer, and (C) a fatty acid amide, said polypropylene resin (A) being present in said polypropylene resin composition in an amount of at least 50 % by weight.

In another aspect, the present invention provides a foamed molded article having an apparent density of 10 g/L to 450 g/L and obtained by heating the above expanded beads in a mold. The thus obtained molded product is preferably aged at a temperature not lower than the melting point of the fatty acid amide minus 10°C for at least 1 hour.

The present invention will be described in detail below with reference to the accompanying drawings, in which

FIG. 1 shows an example of a chart of a DSC curve obtained by first heating of PP expanded beads; and

FIG. 2 shows an example of a chart of a DSC curve obtained by second heating of the polypropylene resin (A).

The PP expanded bead of the present invention comprises cell walls which define a plurality of cells and which are formed of a polypropylene resin composition containing (A) a polypropylene resin, (B) an organic acid-modified olefin elastomer, and (C) a fatty acid amide.

The term "polypropylene resin" as used herein refers to (1) a polypropylene homopolymer, (2) a copolymer of propylene and one or more comonomers having a propylene structural unit content of at least 80 mole %, (3) a mixture of two or more of the homopolymers (1), (4) a mixture of two or more of the copolymers (2), or (5) a mixture of the homopolymer (1) and the copolymer (2). The propylene copolymer may be a block copolymer or a random copolymer.

Examples of the comonomer include ethylene and α-olefins other than propylene, such as 1-butene, 1-pentene and 1-hexene. The comonomer is preferably ethylene and/or 1-butene. Propylene-ethylene copolymers preferably have an ethylene structural unit content of 0.3 to 10 mol %. Propylene-1-butene copolymers preferably have an ethylene structural unit content of 0.3 to 15 mol %. Propylene-ethylene-1-butene terpolymers preferably have an ethylene structural unit content of 0.3 to 6 mol % and a 1-butene structural unit content of 0.3 to 8 mol %.

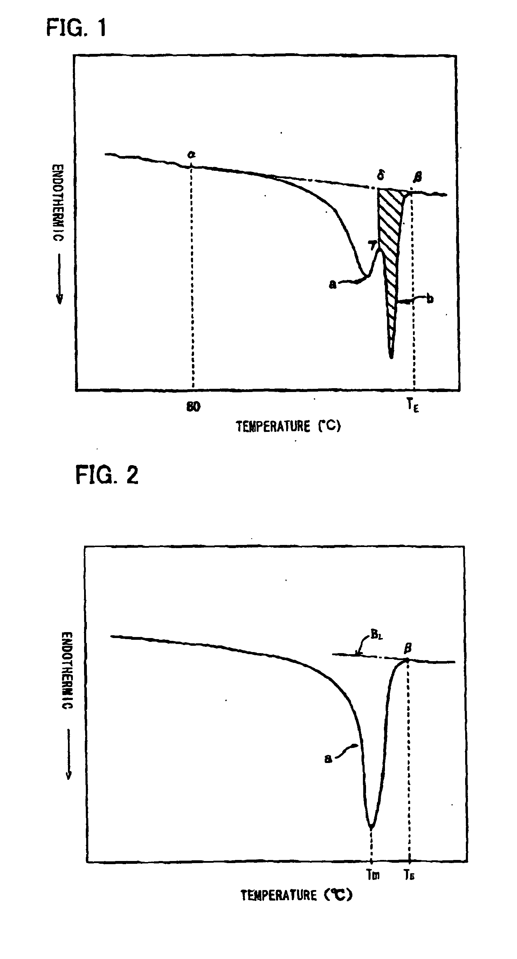

The polypropylene resin (A) preferably has a melting point of 120 to 170°C, more preferably 122°C to 160°C. The melting point of the polypropylene resin (A) is determined by differential scanning calorimetry in which the polypropylene polymer (A) is heated in an atmosphere of nitrogen from room temperature (10 to 40°C) to 220°C at a heating rate of 10°C/minute, then cooled to about 40°C (40 to 50°C) at a rate of 10°C/minute, and again heated to 220°C at a heating rate of 10°C/minute. An example of such a second time DSC curve is shown in FIG 2. The peak temperature Tm of an endothermic peak "a" in FIG 2 is the melting point of the polypropylene resin (A). The polypropylene resin should be present in the polypropylene resin composition in an amount of at least 50 % by weight in order to ensure suitable properties, such as heat resistance, rigidity and chemical resistance, inherent to the polypropylene resin. The content of the polypropylene resin is preferably at least 60 % by weight, more preferably at least 70 % by weight, still more preferably at least 80 % by weight, yet still more preferably at least 85 % by weight, most preferably at least 90 % by weight.

The organic acid-modified olefin elastomer (B) is preferably a graft polymer (B-1) containing an olefin polymer segment as a backbone polymer and a vinyl polymer segment as a branch polymer. The vinyl polymer segment is formed from a vinyl monomer having an acid moiety.

The olefin polymer segment is an olefin elastomer, preferably an ethylene-based copolymer rubber such as an ethylene-propylene copolymer rubber, an ethylene-propylene-diene copolymer rubber, an ethylene-1-butene copolymer rubber or an ethylene-octene copolymer rubber. The ethylene-based copolymer rubber preferably has an ethylene structural unit content of 25 to 85 % by weight, more preferably 30 to 80 % by weight, still more preferably 35 to 75 % by weight. The graft polymer (B-1) or the olefin polymer which constitutes the olefin polymer segment of the graft polymer (B-1) is desirably a polymer which does not have a clear melting point or which gives a fusion peak temperature (melting point) at 70°C or lower, more preferably at 65°C or lower when measured by differential scanning calorimetry. The melting point is determined by differential scanning calorimetry in which the olefin polymer or the graft polymer (B-1) is heated from room temperature (10 to 40°C) to 150°C at a heating rate of 10°C/minute, then cooled to about minus 40°C (minus 45 to minus 35°C) at a rate of 10°C/minute, and again heated to 150°C at a heating rate of 10°C/minute. The temperature of the main peak of the DSC curve obtained in the second time heating represents the melting point of the olefin polymer or the graft polymer (B-1).

The term "acid moiety" as used herein is intended to refer to a group containing the carbonyl of a carboxylic acid group, an ester thereof or an anhydride thereof. Thus, the vinyl monomer having an acid moiety, from which the vinyl polymer segment is formed, may be a carboxylic acid such as maleic acid, (meth)acrylic acid or crotonic acid; a carboxylic acid ester such as an alkyl (meth)acrylate or glycidyl (meth)acrylate; or an acid hydride such as maleic anhydride. The term "(meth)acryl" as used herein is a shorthand term referring to "acryl" and/or "methacryl". For example, "(meth)acrylic acid" is a shorthand term referring to acrylic acid and/or methacrylic acid.

The alkyl (meth)acrylate is preferably a (meth)acrylic ester of an alkyl alcohol having 1 to 20 carbon atoms. Illustrative of suitable alkyl (meth)acrylates are methyl acrylate, ethyl acrylate, butyl acrylate, methyl methacrylate, ethyl methacrylate and butyl methacrylate.

The vinyl monomer having an acid moiety may additionally contain a hydroxyl group or groups. Examples of the hydroxyl group-containing vinyl monomer include 2-hydroxyethyl methacrylate, 2-hydroxypropyl acrylate, 3-hydroxypropyl methacrylate and 2-hydroxyethyl crotonate. The graft polymer (B-1) is disclosed in U. S. Patent Application Publication No. 20060047048.

The fatty acid amide (C) is preferably an amide of a saturated or unsaturated fatty acid having 10 to 25 carbon atoms. Illustrative of suitable fatty acid amides are saturated fatty acid amides such as lauramide, palmitamide, stearamide and behenamide; unsaturated fatty acid amides such as erucamide, oleamide, brassidamide and elaidamide; bis-fatty acid amides such as methylene bis stearamide, methylene bis oleamide, ethylene bis stearamide and ethylene bis oleamide; and secondary amides such as stearyl erucamide and oleyl palmitamide. These amides may be used alone or in combination of two or more thereof. Above all, erucamide, stearyl erucamide, oleamide and ethylene bis oleamide are preferable. Erucamide and stearyl erucamide are particularly preferable for reasons of excellent lubricity and low fogging characteristics (due to low vaporizability thereof). The fatty acid amide (C) preferably has a melting point of 40 to 110 °C, more preferably 60 to 95 °C.

The organic acid-modified olefin elastomer (B) is preferably present in the polypropylene resin composition in an amount of 0.05 to 10 % by weight, more preferably 0.07 to 5 % by weight, still more preferably 0.1 to 3 % by weight, for reasons of effectively preventing vaporization of the fatty acid amide from a PP foamed molded article obtained from the PP expanded beads while ensuring high rigidity and high heat resistance of the PP foamed molded article.

The fatty acid amide (C) is preferably present in the polypropylene resin composition in an amount of 0.01 to 5 % by weight, more preferably 0.05 to 2 % by weight, still more preferably 0.08 to 1 % by weight, for reasons of effectively minimizing creaky noise of a PP foamed molded article obtained from the PP expanded beads while preventing vaporization of the fatty acid amide.

It is preferred that the polypropylene resin composition additionally contain (D) an ethylene-(meth)acrylate copolymer for improving processability of the polypropylene resin composition. In particular, the incorporation of the ethylene-(meth)acrylate copolymer (D) into the polypropylene resin composition can improve the pelletizability of the polypropylene resin composition, expandability of pellets thereof and moldability of PP expanded beads.

As used herein, the term "ethylene-(meth)acrylate copolymer" is intended to refer a copolymer composed only of ethylene and an acrylate, a copolymer composed of ethylene, an acrylate and a comonomer selected from organic acids and organic acid esters, a copolymer composed only of ethylene and a methacrylate, a copolymer composed of ethylene, a methacrylate and a comonomer selected from organic acids and organic acid esters, a terpolymer of ethylene, an acrylate and a methacrylate, a copolymer of ethylene, an acrylate, a methacrylate and a comonomer selected from organic acids and organic acid esters, and a mixture of two or more of the above copolymers.

Specific examples of the ethylene-(meth)acrylate copolymer (D) include ethylene-methyl acrylate copolymer, ethylene-ethyl acrylate copolymer, ethylene-isobutyl acrylate copolymer, ethylene-n-butyl acrylate copolymer, ethylene-2-ethylhexyl acrylate copolymer, ethylene-ethyl acrylate-maleic anhydride terpolymer, ethylene-ethyl acrylate-glycidyl methacrylate terpolymer, ethylene-glycidyl methacrylate copolymer, ethylene-methyl methacrylate copolymer and ethylene-ethyl methacrylate-maleic anhydride terpolymer. Above all, ethylene-ethyl acrylate copolymer is particularly preferable.

The ethylene-(meth)acrylate copolymer (D) preferably has a melting point of 70 to 130°C, more preferably 80 to 110°C, as determined by differential scanning calorimetry in which the ethylene-(meth)acrylate copolymer (D) is heated from room temperature (10 to 40°C) to 190°C at a heating rate of 10°C/minute, then cooled to about 10°C (5 to 15°C) at a rate of 10°C/minute, and again heated to 190°C at a heating rate of 10°C/minute. The temperature of the main peak of the DSC curve obtained in the second time heating represents the melting point of the ethylene-(meth)acrylate copolymer (D).

The ethylene-(meth)acrylate copolymer (D) is preferably present in the polypropylene resin composition in an amount of 0.1 to 10 % by weight, more preferably 0.3 to 8 % by weight, still more preferably 0.5 to 5 % by weight, for reasons of improved processability while ensuring high rigidity and high heat resistance of a PP foamed molded article obtained from the PP expanded beads.

The polypropylene resin composition may further contain (E) a polymer other than the polypropylene resin (A), elastomer (B) or copolymer (D), and/or (F) one or more additives, if desired. Such ingredients (E) and (F) are desired to be present in the polypropylene resin composition in minimum required amounts, generally 20 % by weight or less, preferably 15 % by weight or less, more preferably 10 % by weight or less, still more preferably 7 % by weight or less. The additives (F) include an antioxidant, a UV absorber, an antistatic agent, a flame retardant, a metal deactivator, a pigment, a dye, a nucleating agent, a cell controlling agent and other customarily employed additives. The polypropylene resin composition preferably contains carbon black as a coloring agent in an amount of 0.1 to 5 % by weight, more preferably 0.3 to 4 % by weight.

The PP expanded beads of the present invention may be produced by any suitable known method. In a first known method, resin pellets of the polypropylene resin composition (hereinafter referred to as minipellets) are first prepared and the minipellets are then foamed and expanded to obtain the PP expanded beads. In a second known method, the polypropylene resin composition is melted and kneaded together with a blowing agent. The kneaded mixture is extruded through a die in a lower pressure zone in the form of foamed and expanded strands, which are cut into particles to obtain the PP expanded beads, as disclosed in U. S. patent No. 5,324,753. In a third known method, the polypropylene resin composition is melted and kneaded together with a blowing agent. The kneaded mixture is extruded through a die located underwater or in a lower pressure zone of gas phase and the foaming and expanding extrudate is cut into particles as soon as it exits from the die to obtain the PP expanded beads, as disclosed in U. S. patent No. 6,315,931.

Production of PP expanded beads of the present invention according to the first method will be described in more detail below. First, a polypropylene resin composition containing the polypropylene resin (A), elastomer (B), fatty acid amide (C) and, optionally, copolymer (D), polymer (E) and additives (F) is melted and kneaded in an extruder. In this case, all of the ingredients used may be melted and kneaded together at the same time. It is, however, preferred that the ingredients (B), (C) and, if used, (D) be first melted and kneaded together. The remainder of the ingredients, such as ingredients (A) are then added to the mixture of (B), (C) and, if used, (D) and melted and kneaded together to form the polypropylene resin composition. If desired, the ingredients (B), (C) and, if used, (D) may be previously kneaded together and formed into pellets. The polypropylene resin composition can be obtained using the previously prepared pellets and ingredients (A).

The thus obtained polypropylene resin composition is melted and kneaded in an extruder and extruded through a die in an open space, such as an atmosphere of air or nitrogen, in the form of strands, the resulting strands being subsequently cooled and cut into minipellets (strand-cut method). Such a strand-cut method is described in U. S. patent No. 4,692,507 and U. S. patent application publication No. 20050153134. Alternatively, the kneaded polypropylene resin composition is extruded through a die in water and instantaneously cut to obtain minipellets (underwater cut method), as disclosed in U. S. patent No. 5,041,251.

The size of the minipellets is preferably adjusted to a length/diameter ratio of 0.5 to 2.0, more preferably 0.8 to 1.3 and an average weight per one pellet of 0.05 to 20 mg, more preferably 0.1 to 10 mg. The average weight of one pellet is an arithmetic mean of the weight (mg) of arbitrarily selected 200 minipellets.

Using the thus obtained minipellets, PP expanded beads are produced. In one preferred method, the minipellets are dispersed in an aqueous dispersing medium together with a dispersing agent and a blowing agent in a pressure resisting vessel. The dispersion is heated at a temperature higher than the softening point of the resin of the minipellets to impregnate the minipellets with the blowing agent. The dispersion is then discharged from a discharging port of the vessel to a lower pressure zone to foam and expand the minipellets. Such a dispersion expansion method is disclosed in, for example, U. S. patent No. 5,747,549, No. 6,451,419, No. 6,313,184, No. 6,133,331, No. 6,077,875, No. 6,034,144 and No. 6,956,067.

It is important that the PP expanded beads have a bulk density of 10 g/L to 450 g/L, preferably 15 g/L to 150 g/L, more preferably 18 g/L to 100 g/L. When the bulk density is below 10 g/L, the closed cell content of the PP expanded beads is reduced so that it is difficult to produce a PP foamed molded article. Too high a bulk density above 450 g/L is undesirable because it is difficult to obtain a PP foamed molded article having a desired high expansion ratio. As used herein the bulk density of the PP expanded beads is as measured by the following method. Expanded beads are allowed to stand in an isothermal chamber at 23°C under ambient pressure for 48 hours. The resulting expanded beads are immediately filled in an empty vessel having an inside volume of 1 liter by gravity (without external pressure being applied thereto) while removing the static charge. The weight (g) of the 1 liter expanded beads is measured to determine the bulk density.

The PP expanded beads of the present invention preferably show a high temperature endothermic peak, in a DSC curve thereof as measured by differential scanning calorimetry, in addition to an intrinsic endothermic peak attributed to fusion of the polypropylene resin (A). The high temperature endothermic peak is located at a higher temperature side of the intrinsic endothermic peak. The heat of fusion of the high temperature endothermic peak is preferably 2 to 70 J/g, more preferably 3 to 65 J/g, still more preferably 5 to 58 J/g, particularly preferably 5 to 40 J/g, since such PP expanded beads have a high closed cell content and can produce PP foamed molded articles having a satisfactory compressive strength and a high shock absorbing property in an industrially advantageous manner. In particular, with the above PP expanded beads, it is not necessary to impart an excessively high inside pressure thereto before the beads are molded in a mold cavity. Further, the above PP expanded beads permit efficient production of PP foamed molded articles in a relatively short molding cycle.

It is also preferred that calorific value of the high temperature endothermic peak of the PP expanded beads be 10 to 60 %, more preferably 20 to 50 %, of a total calorific value of the high temperature endothermic peak and the intrinsic peak. The total calorific value of the high temperature endothermic peak and the intrinsic peak is preferably 40 to 150 J/g. As used herein, the term "calorific value" of the high temperature endothermic peak and the peak intrinsic to PP (hereafter referred as 'intrinsic peak') is intended to refer to heat of fusion in an absolute value.

The calorific value of the high temperature peak of the expanded beads is the amount of endotherm and corresponds to the area of an endothermic peak (a high temperature peak) "b" which is present on a higher temperature side of an endothermic peak (intrinsic peak) "a" in a DSC curve obtained by the first heating shown in FIG. 1. These peaks are obtained by the differential scanning calorimetric measurement wherein 2-4 mg of expanded beads are heated In the atmosphere of nitrogen from room temperature (10 to 40°C) to 220°C at a heating rate of 10°C/minute.

More specifically, the calorific value may be determined as follows. In the DSC curve as shown in FIG. 1, a straight line (α-β) extending between the point a in the curve at 80°C and the point β in the curve at a melt completion temperature T_{E} of the expanded beads is drawn. The melt completion temperature T_{E} is a temperature of the intersection β at which the high temperature peak "b" meets the base line (for the sake of illustration, the base line is not shown in FIG.1; but instead a similar base line B_{L} is shown in FIG. 2). Next, a line which is parallel with the ordinate and which passes a point γ in the curve at the bottom of the valley between the intrinsic peak "a" and the high temperature peak "b" is drawn. This line crosses the line (α-β) at a point δ. The area of the high temperature peak "b" is the area (shaded portion in FIG. 1) defined by the curve of the high temperature peak "b", the line (δ-β) and the line (γ-δ) and corresponds to the calorific value (amount of endotherm) of the high temperature peak "b".

A total of the heat of fusion of the high temperature peak "b" and the heat of fusion of the intrinsic peak "a" corresponds to an area defined by the line (α-β) and the DSC curve.

When PP expanded beads having a weight per bead of less than 2 mg are measured for the above-described DSC measurement, two or more beads are sampled for the measurement such that the total weight of the sample is in the range of 2-10 mg. When PP expanded beads to be measured have a weight per bead of 2-10 mg, one bead is sampled for the DSC measurement. When PP expanded beads to be measured have a weight per bead of more than 10 mg, one of the beads is cut into two or more pieces and one of the pieces having a weight of 2-10 mg is sampled for the DSC measurement

The above-described high temperature peak "b", which is considered to be attributed to the formation and growth of crystals of the polypropylene resin (A) during the course of preparation of PP expanded beads from the minipellets, is present in the DSC curve obtained through the first heating. Once the PP expanded beads have completely melted, the high temperature peak "b" no longer appears. Thus, when the sample after the first DSC measurement (heating) is cooled from 220°C to about 40° (40 to 50°C) at a rate of 10°C/min and is subjected to a second heating by raising the temperature to 220°C at a rate of 10°C/min, thus obtained second DSC curve does not show such a high temperature peak but contains only an endothermic peak "a" inherent to the melting of the polypropylene resin (A), like a DSC curve shown in FIG. 2. The second time DSC curve may occasionally contain a peak or a shoulder attributed to ingredients other than the polypropylene resin (A), depending upon the amounts and kinds of such other ingredients, however. The calorific value of the high temperature peak "b" may be controlled in a manner disclosed in, for example, U. S. patent No. 5,747,549, No. 6,451,419, No. 6,313,184, No. 6,077,875, No. 6,034,144, No. 6,956,067, No. 6,355,696 and No. 6,838,488, U. S. patent application publications No. 20040171708 and Japanese Unexamined Patent Publication No. H08-259724.

The PP expanded beads of the present invention may be molded in a mold cavity by any suitable known method to give in-mold PP foamed molded articles. Thus, a PP foamed molded article may be obtained by a batch-type molding method in which the PP expanded beads (if necessary, after being treated to increase the pressure inside of the cells thereof) are filled in a mold cavity which is defined between two or more molds adapted to be heated and cooled and to be opened and closed (method disclosed in, for example, International Publication W02003-078127, U. S. patents No. 4,818,451, No. 4,399,087, No. 4,822,542, No. 5,622,756, No. 6,096,417 and No. 6,815,051, U. S. Patent Application Publications No. 20050113473, No. 20030171465, No. 20060223897 and No. 20050056957). Steam is then fed to the mold cavity to heat, inflate and fuse-bond the beads together. The molds are then cooled and the PP foamed molded article is taken out of the mold cavity. The inside pressure of the PP expanded beads may be increased by placing the beads in a closed vessel and feeding pressurized air to the vessel. By allowing the beads to stand for a suitable period of time, air penetrates into the cells of the beads.

The PP foamed molded article may be also produced by a continuous molding method in which the PP expanded beads (if necessary, after being treated to increase the pressure inside of the cells thereof) are fed to a path which is defined between a pair of vertically spaced, continuously running belts. During the passage through a steam-heating zone, the PP expanded beads are inflated and fuse-bonded together. The resulting molded article is cooled in a cooling zone, discharged from the path and successively cut to a desired length (method disclosed in, for example, U. S. Patent No. 5,968,430 and U. S. Patent No. 6,537,054).

The PP foamed molded articles produced by the above method preferably has an apparent density of 10 g/L to 450 g/L to ensure satisfactory mechanical strengths such as compressive strength and desired lightweight. The apparent density of the PP foamed molded articles is more preferably 15 g/L to 150 g/L, still more preferably 18 g/L to 100 g/L. The term "apparent density" as used herein is intended to refer to an apparent density as defined in JIS K7222(1999). When the molded article has so complicated shape that it is difficult to determine the volume thereof from its outer dimensions, however, the volume thereof can be determined, for example, from the volume of water removed when the PP foamed molded article is immersed in water.

The PP foamed molded article taken out from the mold is then preferably aged at a temperature of not lower than (MP - 10°C), more preferably between (MP - 10°C) and (MP + 20°C), for at least 1 hour, more preferably at least 3 hours, wherein MP is a melting point of the fatty acid amide (C). It has been unexpectedly found that the aging of the molded product under the above specific conditions can significantly enhance the low-noise property of the PP foamed molded article. The melting point (MP) of the fatty acid amide (C) is as measured by DSC in the same manner as that described with reference to the copolymer (D). The upper limit of the aging time is not specifically limited. But an aging time in excess of 48 hours does not provide any additional advantage.

The following examples and comparative examples will further illustrate the present invention.

### Examples 1 to 4 and Comparative Examples 1 to 3

### Raw Materials of Minipellets:

As polypropylene resin (A), a propylene-ethylene random copolymer having a melt flow rate (MFR) of 8 g/10 minutes (as determined according to JIS K7210(1976), test condition: 14 (230°C/2.16 kgf load)) and a melting of 143.5°C, was used.

First composition composed of organic acid-modified olefin elastomer (B), fatty acid amide (C) and ethylene-(meth)acrylate copolymer (D) was used. As organic acid-modified olefin elastomer (B), a graft polymer (B-1) obtained by grafting methyl methacrylate, methacrylic acid and butyl acrylate onto an ethylene-octene copolymer rubber was used. The ethylene-octene copolymer rubber was a commercially available polyolefin elastomer ENGAGE 8100 (manufactured by Dow Chemical Company) and has a melting point of 59°C. The weight ratio of ethylene-octene copolymer rubber: methyl methacrylate: methacrylic acid: butyl acrylate of the graft polymer (B-1) was 90:4:2:4. As fatty acid amide (C), erucamide having a melting point of 81°C was used. An ethylene-ethyl acrylate copolymer was used as ethylene-(meth)acrylate copolymer (D). The ethylene-ethyl acrylate copolymer is a commercially available ethylene-ethyl acrylate copolymer REXPEARL EEA A4200 (manufactured by Japan Polyethylene Corporation) and has a melting point of 95°C. The weight ratio of (B):(C):(D) of the first composition was 24:21:55. The first composition is similar to a commercially available modifier (Scratchproof improver) NOFALLOY KA832 (manufactured by NOF Corporation).

Also used was a second composition having the following formulation. As organic acid-modified olefin elastomer (B), a graft polymer (B-1) obtained by grafting methyl methacrylate, methacrylic acid and butyl acrylate onto an ethylene-octene copolymer rubber was used. The ethylene-octene copolymer rubber was a commercially available polyolefin elastomer ENGAGE 8100 (manufactured by Dow Chemical Company) and has a melting point of 59°C. The weight ratio of ethylene-octene copolymer rubber: methyl methacrylate: methacrylic acid: butyl acrylate of the graft polymer (B-1) was 90:4:2:4. As fatty acid amide (C), oleamide having a melting point of 74°C was used. An ethylene-ethyl acrylate copolymer was used as ethylene-(meth)acrylate copolymer (D). The ethylene-ethyl acrylate copolymer is a commercially available ethylene-ethyl acrylate copolymer REXPEARL EEA A4200 (manufactured by Japan Polyethylene Corporation) and has a melting point of 95°C. The weight ratio of (B):(C):(D) of the second composition was 15:25:60. The second composition is similar to a commercially available modifier (Scratchproof improver) NOFALLOY KA632 (manufactured by NOF Corporation).

Zinc borate powder was used as a cell nucleating agent. Carbon black was used as a coloring agent.

### Preparation of Minipellets:

The above polypropylene resin (A), first or second composition, zinc borate powder and carbon black were charged in an extruder in amounts shown in Table 1 and kneaded at 210°C (Examples 1 to 4). In Comparative Examples 1 to 3, neither the first composition nor the second composition was used. The kneaded mixture was extruded through a die in the form of strands. The strands were immersed in water for cooling and then cut to obtain cylindrical minipellets having a length/diameter ratio of 1.2. The average weight per one minipellet and MFR of the minipellets are also shown in Table 1.

**Table 1**

| | Unit | Examples 1 and 4 | Comparative Examples 1 and 3 | Example 2 | Comparative Example 2 | Example 3 |
|---|---|---|---|---|---|---|
| Polypropylene resin (A) | % by weight | 95.11 | 97.11 | 95.21 | 97.21 | 94.21 |
| Zinc borate powder | | 0.09 | 0.09 | 0.09 | 0.09 | 0.09 |
| Carbon black | | 2.8 | 2.8 | 2.7 | 2.7 | 2.7 |
| First composition | | 2 | 0 | 2 | 0 | 0 |
| Second composition | | 0 | 0 | 0 | 0 | 3 |
| Average weight per minipellet | mg | 1.65 | 1.65 | 0.8 | 0.8 | 0.8 |
| MFR of minipellets | g/10min. | 9 | 10 | 10 | 9 | 10 |

### Preparation of PP Expanded Beads:

In an autoclave, 100 parts by weight of the above minipellets, 700 parts by weight of water, and sodium dodecylbenzenesulfonate (DBSN) as a surfactant and kaolin powder as a dispersing agent, in amounts shown in Table 2, were charged. After closing the autoclave, the contents were subjected to heating under stirring. When a temperature lower by 5°C than the expansion temperature shown in Table 2 was reached, high pressure carbon dioxide (blowing agent) was fed into the autoclave. The feed of carbon dioxide was controlled so that the pressure within the autoclave was maintained at a pressure shown in Table 2 until the start of expansion. The contents in the autoclave were further heated to an expansion temperature shown in Table 2 and maintained at that temperature for 15 minutes. Then, a discharge port at a lower portion of the autoclave was opened to discharge the contents to the atmosphere to allow the minipellets to foam and expand, thereby obtaining PP expanded beads. The discharge was carried out while feeding a carbon dioxide gas such that the pressure within the autoclave was maintained at a pressure equal to the pressure in the autoclave immediately before the commencement of the discharge. The PP expanded beads obtained were washed with water, dehydrated by centrifuge and allowed to stand at ambient temperature (23°C) under ambient pressure for at least 48 hours for aging. The beads were then sampled for measurement of calorific value of a high temperature peak thereof and bulk density. The results are summarized in Table 2.

The PP expanded beads of Example 4 and Comparative Example 3 were obtained by increasing the pressure inside the cells of the PP expanded beads of Example 1 and Comparative Example 1, respectively. The pressure increasing treatment was carried out as follows. The PP expanded beads were placed in a closed vessel, to which pressurized air of 0.68 MPa(G) was fed so that the inside pressure of the cells of the beads was increased. The resulting beads were taken out of the vessel and heated with steam so that the bulk density thereof was decreased to 18 g/L. The expanded beads were then allowed to stand at ambient temperature (23 °C) under ambient pressure for at least 48 hours for aging. The PP expanded beads of Example 4 and Comparative Example 3 have the same calorific value of a high temperature peak as those of Example 1 and Comparative Example 1, respectively.

The melting point of the polypropylene resin (A) and the calorific value of the PP expanded beads were measured using Shimadzu Heat Flux Differential Scanning Calorimeter DSC-50 (data processor: TA-50WSI) manufactured by Shimadzu Corporation.

### Preparation of PP Foamed Molded Articles:

The PP expanded beads thus aged at ambient temperature in each of Examples 1-4 and Comparative Examples 1-3 were molded in a mold cavity having an inside dimension of 40cm×30cm×8cm defined between a pair of molds of a molding machine (Model EHV-C PP manufactured by ERLENBACH MASCHINEN) to obtain PP foamed molded article. The beads were filled in the mold cavity in a pressurized state using pressurized air, pre-heated with saturated steam at 230 kPa(G) and fully heated with saturated steam at 330 kPa(G) to obtain a PP foamed molded article. The molds were cooled and the foamed molded article was taken out of the mold cavity. The PP foamed molded article was aged at 80°C for 5 hours and then at 23°C for 1 day and then measured for the apparent density and shrinkage. The results are shown in Table 2. The shrinkage is determined by measuring the length (L) of the article that corresponds to the 40 cm dimension of the mold and is calculated by (40-L)×100/40 (%). Further, a plurality of PP foamed molded articles having apparent densities of 50 to 70 g/L were prepared in each of Examples 1-3 and Comparative Examples 1-2 in the same manner as described above except for the use of various pressures under which the PP expanded beads were filled in the mold cavity and various pressures of pressurized air. A plurality of PP foamed molded articles having apparent densities of 30 to 40 g/L were also prepared in each of Example 4 and Comparative Example 3 in the same manner as described above except for the use of various pressures under which the PP expanded beads were filled in the mold cavity and various pressures of pressurized air. These PP foamed molded articles were tested for various physical properties as described below.

**Table 2**

| | Unit | Example 1 | Comparative Example 1 | Example 2 | Comparative Example 2 | Example 3 | Example 4 | Comparative Example 3 |
|---|---|---|---|---|---|---|---|---|
| DBSN | parts by weight | 0.25 | 0.25 | 0.2 | 0.2 | 0.2 | - | - |
| Kaolin | parts by weight | 1.9 | 1.5 | 1.5 | 1.5 | 1.5 | - | - |
| Expansion temperature | °C | 148.1 | 151.6 | 146.5 | 150.2 | 147.0 | - | - |
| Pressure in autoclave | MPa (G) | 3.2 | 3 | 3.5 | 3.3 | 3.5 | - | - |
| Bulk density of PP expanded beads | g/L | 35 | 35 | 33 | 33 | 33 | 18 | 18 |
| Calorific value of high temperature peak | J/g | 21 | 21 | 21 | 21 | 21 | 21 | 21 |
| Apparent density of PP foamed molded article | g/L | 60 | 60 | 57 | 58 | 54 | 33 | 34 |
| Shrinkage of PP foamed molded article | % | 1.7 | 1.7 | 1.7 | 1.8 | 1,6 | 2.1 | 2.1 |

### Physical Properties of PP Foamed Molded Articles:

The PP foamed molded articles obtained in each of Examples 1 to 4 and Comparative Examples 1-3 were arbitrarily chosen and tested for various respective physical properties as follows.

(1) Compressive strength at 50 % compression was measured in accordance with international standard ISO 844. The results are shown in Table 3.

(2) Tensile strength was measured in accordance with international standard ISO 1798. The results are shown in Table 3.

(3) Elongation at break was measured In accordance with international standard ISO 1798. The results are shown in Table 3.

(4) Burning rate was measured in accordance with a standard FMVSS302. This standard is one of Federal Motor Vehicle Safety Standards of U. S. A. The smaller the value, the lower is the flammability. The results are shown in Table 4.

**Table 3**

| Test Item | Unit | Example 1 | Comparative Example 1 | Example 2 | Comparative Example 2 | Example 3 | Example 4 | Comparative Example 3 |
|---|---|---|---|---|---|---|---|---|
| Apparent density of test piece | g/L | 58 | 60 | 58 | 60 | 58 | 34 | 30 |
| Compressive strength at 50 % compression | kPa | 415 | 475 | 415 | 475 | 412 | 208 | 200 |
| Tensile strength | kPa | 864 | 760 | 864 | 760 | 820 | 445 | 450 |
| Elongation at break | % | 25 | 17 | 25 | 17 | 25 | 28 | 20 |

**Table 4**

| Test Item | Unit | Example 1 | Comparative Example 1 | Example 2 | Comparative Example 2 | Example 3 | Example 4 | Comparative Example 3 |
|---|---|---|---|---|---|---|---|---|
| Apparent density of test piece | g/L | 70 | 56 | 58 | 67 | 56 | 38 | 36 |
| Burning rate | mm/min. | 42 | 40 | 42 | 40 | 42 | 89 | 80 |

(5) Fogging characteristics were tested in accordance with German industrial standards (Deutsche Industrie Normen) DIN75201-B concerning determination of the windscreen fogging characteristics of trim materials in motor vehicles. Test piece of a flat cylindrical shape having a diameter of 80 mm and a thickness of 10 mm is cut out from a PP foamed molded article and placed in a beaker. The beaker is then covered with an aluminum foil and placed in an atmosphere at 100°C for 16 hours. Thereafter, an increase of the weight of the aluminum foil is measured. The larger is the amount of vaporized matters, the greater becomes the weight increase, because the weight increases when the fatty acid amide contained in the test piece vaporizes and deposits on the aluminum foil. The test results are shown in Table 5. The amount of vaporized matters as determined by the above test is preferably 3 mg or less. Especially, the amount of vaporized matters is preferably 2 mg or less, when the PP foamed molded article is intended to be used as a part of an interior material for automobiles. The smaller the amount of vaporized matters, the lesser is the degree of fogging on windows of automobiles or other glasses located in an environment in which the PP foamed molded article coexists.

**Table 5**

| Test Item | Unit | Example 1 | Comparative Example 1 | Example 2 | Comparative Example 2 | Example 3 | Example 4 | Comparative Example 3 |
|---|---|---|---|---|---|---|---|---|
| Apparent density of test piece | g/L | - | - | 50 | 60 | 54 | - | - |
| Fogging characteristics (DIN 75201-B) | mg | - | - | 0.4 | 0.4 | 0.86 | - | - |

(6) Creaky noise test (I) was performed as follows. Two first and second test pieces are cut out from a PP foamed molded article. The first test piece has a flat cylindrical shape having a diameter of 50 mm and a thickness of 10 mm. One of the circular faces was once the outer peripheral surface of the PP foamed molded article and represents a testing surface. The second test piece is a flat rectangular plate having two square faces of 100mmx100mm and a thickness of 10 mm. One of the square faces was once the outer surface of the PP foamed molded article and represents a testing surface thereof. Creaky noise test was conducted at ambient temperature using a tensile/compression test machine (INSTRON 5567 H1509 manufactured by Instron Corporation). A rotating plate is secured to a shaft of a motor mounted on a lower plate of the test machine so that the rotational speed of the rotating plate can be controlled. The first test piece is fixed to the rotating plate for rotation therewith with its testing surface upward, while the second test piece is fixed to an upper plate of the test machine with its testing surface downward. The upper plate is then moved toward the lower plate such that the testing surfaces of the first and second test pieces are maintained in parallel with each other and the center axes of the first and second test pieces approximately coincide with each other. The downward movement of the upper plate is stopped when it has moved a length of 0.65 mm after the testing surfaces of the first and second test pieces were brought into contact with each other, so that the testing surfaces of the first and second test pieces are in compression engagement with each other. Then the rotating plate is rotated at a revolution speed of 15 rpm (revolutions per minute) to cause frictional between the two testing surfaces. Creaky noise is heard with ears at a distance of 50 cm from the testing point and evaluated according to the ratings shown below.

excellent: substantially no creaky noise is heard

good: slight creaky noise is heard

poor: significant creaky noise is heard

(7) Creaky noise test (II) was performed as follows. Two first and second test pieces are cut out from a PP foamed molded article. The first test piece is a flat rectangular prism having two rectangular parallelepiped faces of 50mmx20mm and a thickness of 10 mm. One of the faces was once the outer peripheral surface of the PP foamed molded article and represents a testing surface. The second test piece is a flat rectangular prism having two square faces of 100mm×100mm and a thickness of 10 mm. One of the square faces was once the outer surface of the PP foamed molded article and represents a testing surface thereof. Creaky noise test was conducted at ambient temperature using SSP-01 Stick-Slip testing stand (manufactured by ZIEGLER-Instruments GmbH). The first test piece is fixed to a flat plate attached to a steel spring of the test stand, while the second test piece is fixed to a moving table of the test stand for movement therewith such that the testing surfaces of the first and second test pieces are faced to each other and maintained in parallel with each other. The steel spring is then moved so that the parallel testing surfaces are brought into compression engagement with each other with a contact force of 40 N. In this state, the moving table is reciprocated through a length of 20 mm at a speed of 10 mm/s to cause friction between the two testing surfaces, while measuring the stick-slip behavior of materials for investigation of the friction parameters responsible for creaky noise. The measurement of the stick-slip behavior is expressed as a "stick-slip risk" that can be low, medium or high on a scale from 1 to 10 as shown below. The lower the scale number, the lesser is the emission of creaky noise. This test is in accordance with VDA-standard VDA 230-206 relating to German test standards for automobile interior materials. The results of creaky noise tests (1) and (2) are shown in Table 6.

Scales 1 to 3: low risk

Scales 4 to 6: medium risk

Scales 7 to 10: high risk

**Table 6**

| Test Item | Unit | Example 1 | Comparative Example 1 | Example 2 | Comparative Example 2 | Example 3 | Example 4 | Comparative Example 3 |
|---|---|---|---|---|---|---|---|---|
| Apparent density of test piece | g/L | 70 | 56 | 58 | 67 | 56 | 38 | 36 |
| Creaky noise test (I) | | excellent | poor | excellent | poor | excellent | excellent | poor |
| Creaky noise test (II) | Scale No. | - | - | 2 | 7 | - | - | - |

As will be appreciated from Tables 1 and 2, PP foamed molded article of Example 1 is very similar to that of Comparative Example 1 with respect to the composition, properties of minipellets, bulk density and calorific value of high temperature peak of PP expanded beads, apparent density and shrinkage of PP foamed molded article except that ingredients (B), (C) and (D) are absent in the PP foamed molded article of Comparative Example 1. The above also applies to PP foamed molded article of Example 2 and Comparative Example 2, those of Example 3 and Comparative Example 2, and those of Example 4 and Comparative Example 3. Thus, the effect of the use of ingredients (B), (C) and (D) can be well understood by comparison of Examples with the corresponding Comparative Examples.

From the results summarized in Table 3, it is appreciated that the tensile strength and elongation at break are improved when ingredients (B), (C) and (D) (first or second composition) are incorporated. Whilst the compressive strength at 50 % compression is reduced when ingredients (B), (C) and (D) are incorporated, such a reduction is slight in view of the difference in apparent density of the test pieces. It is inferred that the elasticity of the PP foamed molded article increases due to the presence of the olefin elastomer (ingredient (B)).

The results summarized in Table 4 indicate that ingredients (B), (C) and (D) have little influence upon the flammability of the PP foamed molded articles.

From the results shown in Table 5, it is appreciated that the amount of vaporized matters in Example 2 is comparable to that in Comparative Example 2 notwithstanding that Example 2 use a fatty acid amide (ingredient (C)). The amount of vaporized matters is significantly smaller in Example 2 in which erucamide is used as fatty acid amide (Ingredient (C)) than that in Example 3 in which oleamide is used as Ingredient (C). The amount of vaporized matters in Example 3 is within an allowable range, however. Since the polypropylene resin composition of Examples 1 and 4 is substantially similar to that of Example 2 and the polypropylene resin composition of Comparative Examples 1 and 3 is substantially similar to that of Comparative Example 2, it is well expected that the amount of vaporized matters in the PP foamed molded articles of these Examples 1 and 4 will be comparable to that of Comparative Examples 1 and 3.

From the results of creaky noise test (I) shown in Table 6, it is appreciated that the PP foamed molded articles containing Ingredients (B), (C) and (D) does not emit creaky noise when subjected to friction. It has also confirmed that similar low-noise properties are obtainable when the same creaky noise test (I) is repeated again one month later.

From the results of creaky noise test (II) shown in Table 6, it is appreciated that the PP foamed molded articles of Example 2 containing ingredients (B), (C) and (D) has a significantly lower risk to emit creaky noise as compared with Comparative Example 2. It is well expected that the same tendency is seen in the PP foamed molded articles of other Examples and Comparative Examples.

In the above Examples ingredient (D) is used together with ingredients (B) and (C). While the addition of ingredient (D) is desirable, an improvement of low-noise properties may be obtained without ingredient (D).

Thus, the PP expanded beads according to the present invention can give a PP foamed molded article which exhibits good low-noise properties for a long time. It is, therefore, not necessary to apply a coating of a noise-preventing material to a foamed molded article. Further, blooming of a higher fatty acid amide which may result in fogging or emission of unpleasant odors is effectively prevented.

The PP foamed molded articles of the present invention emit almost no or significantly reduced creaky noise when they are rubbed one against the other. Thus, the PP foamed molded articles are suitably used for various applications such as furniture (e.g. bookshelves) and automobile interior materials (e.g. seats, arm rests, head rests and sun visors) in which two or more PP foamed molded articles are assembled in contact with each other. Further, the PP foamed molded article exhibits similar effect when subjected to friction against a body other than the PP foamed molded article such as a floor material, a plastic body or an elastomer and may be used as, for example, furniture (e.g. bookshelves and chairs) and various automobile interior materials.

Thus, it will be appreciated that the present invention can provide a PP foamed molded article which has low-noise properties (namely, which emits substantially no or significantly reduced creaky or squeaky noise when subjected to friction), which can exhibit the low-noise properties for a long period of service and which can be prepared without a troublesome coating step.

## Claims

1. Expanded beads of a polypropylene resin composition having a bulk density of 10 g/L to 450 g/L, said polypropylene resin composition comprising (A) a polypropylene resin, (B) an organic acid-modified olefin elastomer, and (C) a fatty acid amide, said polypropylene resin (A) being present in said polypropylene resin composition in an amount of at least 50 % by weight.

2. Expanded beads as claimed in claim 1, showing a high temperature endothermic peak, in a DSC curve thereof as measured by differential scanning calorimetry, in addition to an intrinsic endothermic peak attributed to fusion of said polypropylene resin (A), wherein said high temperature endothermic peak is located at a higher temperature side of said intrinsic endothermic peak and has a heat of fusion of 2 to 70 J/g.

3. Expanded beads as claimed in claim 1 or 2, wherein said organic acid-modified olefin elastomer (B) is a graft polymer containing an olefin polymer segment as a backbone polymer and a vinyl polymer segment as a branch polymer, said vinyl polymer segment being formed from a vinyl monomer having an acid moiety.

4. Expanded beads as claimed in any preceding claim, wherein said organic acid-modified olefin elastomer (B) is present in said polypropylene resin composition in an amount of 0.05 to 10 % by weight.

5. Expanded beads as claimed in any preceding claim, wherein said fatty acid amide (C) is present in said polypropylene resin composition in an amount of 0.01 to 5 % by weight.

6. Expanded beads as claimed in any preceding claim, wherein said polypropylene resin composition further comprises (D) an ethylene-(meth)acrylate copolymer.

7. Expanded beads as claimed in claim 6, wherein said ethylene-(meth)acrylate copolymer (D) is present in said polypropylene resin composition in an amount of 0.1 to 10 % by weight.

8. A foamed molded article having an apparent density of 10 g/L to 450 g/L and obtained by heating expanded beads of any preceding claim in a mold cavity.

9. A foamed molded article as claimed in claim 8, wherein said heating to fuse - bond the expanded beads together is followed by aging at a temperature of not lower than (MP-10°C) for at least 1 hour, wherein MP is a melting point of the fatty acid amide (C).

10. A foamed molded article as claimed in claim 8, wherein said heating to fuse - bond the expanded beads together is followed by aging at a temperature of between (MP - 10°C) and (MP + 20°C) for at least 3 hours, wherein MP is a melting point of the fatty acid amide (C).

11. A foamed molded article as claimed in claim 8 or 9 or 10, wherein said foamed molded article has not more than 2 mg of the fogging characteristics as determined by a test method in accordance with DIN 75201-B.

## Patentansprüche

1. Expandierte Kügelchen aus einer Polypropylenharzzusammensetzung mit einer Schüttdichte von 10 g/l bis 450 g/l, wobei die Polypropylenharzzusammensetzung (A) ein Polypropylenharz, (B) ein mit organischer Säure modifiziertes Olefinelastomer und (C) ein Fettsäureamid aufweist, wobei das Polypropylenharz (A) in der Polypropylenharzzusammensetzung in einer Menge von zumindest 50 Gewichts-% vorhanden ist.

2. Expandierte Kügelchen wie in Anspruch 1 beansprucht, die einen endothermen Hochtemperaturpeak in ihrer DSC-Kurve zeigen, gemessen durch Differentialabtastkalorimetrie (differential scanning calorimetry), zusätzlich zu einem intrinsischen endothermen Peak, welcher der Fusion des Polypropylenharzes (A) zugeordnet wird, wobei sich der endotherme Hochtemperaturpeak auf der Seite der höheren Temperatur des intrinsischen endothermen Peaks befindet und eine Schmelzwärme von 2 bis 70 J/g hat.

3. Expandierte Kügelchen wie in Anspruch 1 oder 2 beansprucht, wobei das mit organischer Säure modifizierte Olefinelastomer (B) ein Propfpolymer ist, enthaltend ein Olefinpolymersegment als ein Rückgratpolymer und ein Vinylpolymersegment als ein Verzweigungspolymer, wobei das Vinylpolymersegment aus einem Vinylpolymer mit einer Säureeinheit gebildet wird.

4. Expandierte Kügelchen wie in irgendeinem vorhergehenden Anspruch beansprucht, wobei das mit organischer Säure modifizierte Olefinelastomer (B) in der Polypropylenharzzusammensetzung in einer Menge von 0,05 bis 10 Gewichts-% vorhanden ist.

5. Expandierte Kügelchen wie in irgendeinem vorhergehenden Anspruch beansprucht, wobei das Fettsäureamid (C) in der Polypropylenharzzusammensetzung in einer Menge von 0,01 bis 5 Gewichts-% vorhanden ist.

6. Expandierte Kügelchen wie in irgendeinem vorhergehenden Anspruch beansprucht, wobei die Polypropylenharzzusammensetzung weiterhin (D) ein Ethylen-(Meth)Acrylat-Copolymer aufweist.

7. Expandierte Kügelchen wie in Anspruch 6 beansprucht, wobei das Ethylen-(Meth)Acrylat-Copolymer (D) in der Polypropylenharzzusammensetzung in einer Menge von 0,1 bis 10 Gewichts-% vorhanden ist.

8. Geschäumter Formgegenstand mit einer scheinbaren Dichte von 10 g/l bis 450 g/l, der durch Erwärmen von expandierten Kügelchen gemäß irgend einem vorhergehenden Anspruch in einem Formhohlraum erhalten wird.

9. Geschäumter Formgegenstand wie in Anspruch 8 beansprucht, wobei der Erwärmung, um die expandierten Kügelchen durch Verschmelzen zu verbinden, Alterung bei einer Temperatur von nicht weniger als (MP - 10°C) für zumindest 1 Stunde folgt, wobei MP ein Schmelzpunkt des Fettsäureamids (C) ist.

10. Geschäumter Formgegenstand wie in Anspruch 8 beansprucht, wobei der Erwärmung, um die expandierten Kügelchen durch Verschmelzen zu verbinden, Alterung bei einer Temperatur von zwischen (MP - 10°C) und (MP + 20°C) für zumindest 3 Stunden folgt, wobei MP ein Schmelzpunkt des Fettsäureamids (C) ist.

11. Geschäumter Formgegenstand wie in Anspruch 8 oder 9 oder 10 beansprucht, wobei der geschäumte Formgegenstand nicht mehr als 2 mg der Trübungscharakteristiken hat, wie sie durch ein Testverfahren in Übereinstimmung mit DIN 75201-B bestimmt werden.

## Revendications

1. Perles expansées d'une composition de résine de polypropylène ayant une masse volumique apparente de 10 g/l à 450 g/l, ladite composition de résine de polypropylène comprenant (A) une résine de polypropylène, (B) un élastomère d'oléfine modifiée par un acide organique, et (C) un amide d'acide gras, ladite résine de polypropylène (A) étant présente dans ladite composition de résine de polypropylène dans une quantité d'au moins 50 % en poids.

2. Perles expansées selon la revendication 1, montrant un pic endothermique à haute température, dans sa courbe DSC, tel que mesuré par une analyse calorimétrique différentielle, en plus du pic endothermique intrinsèque attribué à la fusion de ladite résine de polypropylène (A), dans lesquelles ledit pic endothermique à haute température est localisé sur un côté à température supérieure dudit pic endothermique intrinsèque et a une chaleur de fusion de 2 à 70 J/g.

3. Perles expansées selon la revendication 1 ou 2, dans lesquelles ledit élastomère d'oléfine modifiée par un acide organique (B) est un polymère greffé contenant un segment de polymère d'oléfine comme chaîne principale et un segment de polymère de vinyle comme chaîne secondaire, ledit segment de polymère de vinyle étant formé à partir d'un monomère de vinyle ayant un groupement acide.

4. Perles expansées selon l'une quelconque des revendications précédentes, dans lesquelles ledit élastomère d'oléfine modifiée par un acide organique (B) est présent dans ladite composition de résine de polypropylène dans une quantité de 0,05 à 10 % en poids.

5. Perles expansées selon l'une quelconque des revendications précédentes, dans lesquelles ledit amide d'acide gras (C) est présent dans ladite composition de résine de polypropylène dans une quantité de 0,01 à 5 % en poids.

6. Perles expansées selon l'une quelconque des revendications précédentes, dans lesquelles ladite composition de résine de polypropylène comprend en outre (D) un copolymère éthylène-(méth)acrylate.

7. Perles expansées selon la revendication 6, dans lesquelles ledit copolymère éthylène-(méth)acrylate (D) est présent dans ladite composition de résine de polypropylène dans une quantité de 0,1 à 10 % en poids.

8. Article moulé expansé ayant une densité apparente de 10 g/l à 450 g/l et obtenu en chauffant les perles expansées selon l'une quelconque des revendications précédentes dans une cavité de moule.

9. Article moulé expansé selon la revendication 8, dans lequel ledit chauffage pour lier par fusion les perles expansées ensemble est suivi d'un vieillissement à une température d'au moins (MP - 10°C) pendant au moins une heure, dans lequel MP est le point de fusion de l'amide d'acide gras (C).

10. Article moulé expansé selon la revendication 8, dans lequel ledit chauffage pour lier par fusion les perles expansées ensemble est suivi d'un vieillissement à une température comprise entre (MP - 10°C) et (MP + 20°C), pendant au moins 3 heures, dans lequel le MP est le point de fusion de l'amide d'acide gras (C).

11. Article moulé expansé selon la revendication 8, 9 ou 10, dans lequel ledit article moulé expansé n'a pas plus de 2 mg de caractéristiques de condensation, telles que déterminées par un procédé de test selon la norme DIN 75201-B.
